# EUROPEAN PATENT APPLICATION

(11) **EP 4 292 425 A1**
(43) Date of publication of application: **20.12.2023**
(21) Application number: 23176395.4
(22) Date of filing: 31.05.2023
(51) Int. Cl.: A01G 20/47

(54) **BLOWER HAVING NOISE REDUCTION FEATURES**

(30) Priority: 16.06.2022 US 202263352801 P
(71) Applicant: Milwaukee Electric Tool Corporation, Brookfield WI 53005-2550 (US)
(72) Inventor: Golding, Samuel J., Brookfield, Wisconsin, 53005-2550 (US); Gulliksen, Connor, Brookfield, Wisconsin, 53005-2550 (US); Bartlett, Shannon, Brookfield, Wisconsin, 53005-2550 (US)
(74) Representative: Grünecker Patent- und Rechtsanwälte PartG mbB

(57) **Abstract**

A blower (10) is provided, including a blower assembly (12), the blower assembly including a motor (20), a fan (22), and a power source (40). The blower further includes a tube assembly (50) connected to the blower assembly, the tube assembly including a flexible tube (54). The blower further includes a liner (80) disposed within the flexible tube, the liner formed from a damper material.

## Description

### CROSS-REFERENCE TO RELATED APPLICATIONS

The present application claims priority to U.S. Provisional Patent Application No. 63/352,801 filed on June 16, 2022, the disclosure of which is incorporated by reference herein in its entirety.

### FIELD

The present disclosure relates generally to blowers for use in outdoor applications, such as for blowing leaves and other debris. In particular, the present disclosure relates to blowers having improved noise reduction features.

### BACKGROUND

Blowers are frequently utilized in outdoor applications, such as to blow leaves and other debris. Homeowners frequently utilized such blowers to clean their yards and outdoor spaces. The types of blowers can vary between backpack-style blowers and handheld blowers, as well as between gas-powered and electric blowers. Electric blowers can be corded and plugged into electrical outlets, or can be cordless and battery powered.

One issue with known blowers is the noise level that is generated by the blower during operation. A quieter blower can be produced simply by reducing the power and performance level of the blower, but the resulting product is not desirable to the customer due to the lack of performance.

Another issue in some blowers, such as in backpack-style blowers, is a loss of efficiency as the air travels through various components of the blower before exiting the blower.

Accordingly, improved blowers which include noise reduction features while not having diminished performance are desired in the art. In particular, blowers which include both reduced noise generation and improved performance characteristics would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a blower includes a blower assembly, the blower assembly including a motor, a fan, and a power source. The blower further includes a tube assembly connected to the blower assembly, the tube assembly including a flexible tube. The blower further includes a liner disposed within the flexible tube, the liner formed from a damper material.

In accordance with another embodiment, a blower includes a frame assembly and a blower assembly coupled to the frame assembly, the blower assembly including a motor, a fan, and a power source. The blower further includes a tube assembly connected to the blower assembly, the tube assembly including a rigid inlet tube, a flexible transition tube, and a rigid outlet tube. The blower further includes a liner disposed within the flexible transition tube, the liner formed from a damper material.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 provides a perspective view of a blower in accordance with embodiments of the present disclosure; and
FIG. 2 provides a cross-sectional view of a corrugated tube with insert in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

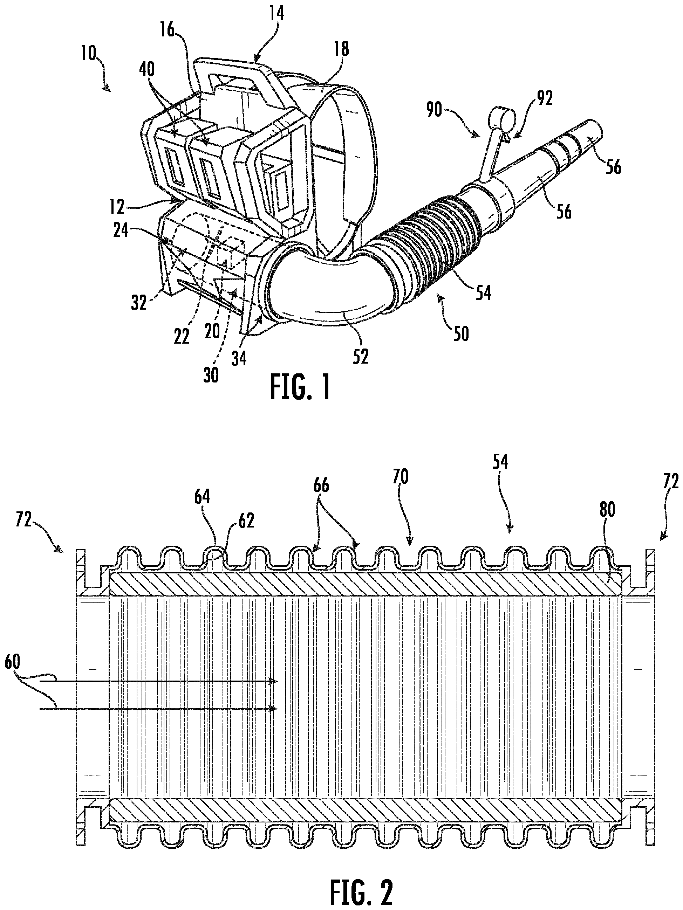

Referring now to FIG. 1, one embodiment of a blower 10 in accordance with the present disclosure is illustrated. In the embodiment shown, blower 10 is a backpack-style blower. However, it should be understood that the present disclosure is not limited to the backpack-style blowers, and rather that handheld and other suitable styles of blowers are within the scope and spirit of the present disclosure.

A blower 10 in accordance with the present disclosure may include a blower assembly 12, and may further include a frame assembly 14. The blower assembly 12 may be coupled to the frame assembly 14 such that a user may wear the blower 10 like a backpack. For example, frame assembly 14 may include a frame 16 and a harness 18. Shoulder straps of the harness 18 may be worn on the shoulders of a user when the blower 10 is worn as a backpack.

Blower assembly 12 may a motor 20 and a fan 22 driven by the motor 20. Motor 20 and fan 22 may be fully or partially encompassed by a housing 24 of the blower assembly 12. Housing 24 may be connected to the frame assembly 14 such that the blower assembly 12 is coupled to the frame assembly 14. Housing 24 further defines an airflow path 30 therethrough. Airflow path 30 may extend between and define an inlet 32 and an outlet 34. Airflow along the airflow path 30 may flow into the housing 24 through the inlet 32 and be exhausted from the housing 24 through the outlet 34. The motor 20 and/or fan 22 may be fully or partially disposed in the airflow path 30. During operation, the motor 20 causes rotation of the fan 22 which in turn causes the fan to draw air to flow through the airflow path 30.

In some embodiments, blower 10 is a centrifugal-type blower, wherein for example the fan 22 is an impeller that draws air axially through the inlet 32 to be centrifugally forced out the outlet 34. Alternatively, as shown, blower 10 may be an axial-type blower, wherein the fan 22 draws air axially through the inlet 32 and towards the outlet 34. In still other embodiments, other suitable air flow direction types may be utilized.

Motor 20 may be powered by a power source 40 which is connected to the motor 20. In exemplary embodiments, motor 20 is an electric motor. Power source 40 may in these embodiments be one or more batteries, as shown, or a wired electrical connection. Alternatively, power source 40 may be an internal combustion engine and motor 20 may be an internal combustion type motor, or other suitable power sources 40 and/or engine types may be utilized.

Blower 10 may further include a tube assembly 50 which is connected at a proximal end thereof to the blower assembly 12, such as to the housing 24 at the outlet 34. Air flowed through the outlet 34 may be flowed through the tube assembly 50 and exhausted from the tube assembly 50 at a distal end thereof. Such exhaustion from the tube assembly 50 may exhaust the air from the blower 10 generally.

Tube assembly 50 may include one or more rigid tubes and one or more flexible tubes. Rigid tubes may in general be formed from relatively rigid materials, such as hard molded plastics, which are generally non-deformable during typical blower operation. Flexible tubes may in general be formed from materials which are relatively less rigid, such as plastics, and/or may include design features to facilitate deformation thereof, such as corrugations, such that the flexible tubes are generally deformable during typical blower operation.

For example, in some embodiments, a tube assembly 50 may include on or more inlet tubes 52. In exemplary embodiments, an inlet tube 52 is an elbow-shaped tube, and thus turns the air flowing therethrough by, for example, between 30 degrees and 150 degrees, such as between 45 degrees and 135 degrees, such as between 60 degrees and 120 degrees, such as between 75 degrees and 105 degrees, such as approximately 90 degrees. Additionally or alternatively, however, an inlet tube 52 may be an axial (or straight) tube or may have any other suitable directional configuration. Inlet tubes 52 may be connected, such as directly connected, to the blower assembly 12, such as to the housing 24 at the outlet 34, or to another inlet tube 52. Air flowed through the outlet 34 may thus be flowed into the inlet tube(s) 52.

In some embodiments, as shown, inlet tubes 52 are rigid tubes. Alternatively, inlet tubes 52 may be flexible tubes. For example, in some embodiments, inlet tubes 52 may be corrugated tubes.

In some embodiments, a tube assembly 50 may include a transition tube 54. In exemplary embodiments, transition tube 54 is an axial (or straight) tube, as shown. Alternatively, transition tube 54 may be an elbow-shaped tube or have any other suitable directional configuration. Transition tube 54 may be connected, such as directly connected, to the inlet tube 52. Air flowed through the inlet tube 52 may thus be flowed from the inlet tube 52 into the transition tube 54.

In some embodiments, inlet tube 52 is a rigid tube. Alternatively, as shown, inlet tube 52 may be a flexible tube. For example, in some embodiments, inlet tube 52 is a corrugated tube.

In some embodiments, a tube assembly 50 may include one or more outlet tubes 56. In exemplary embodiments, outlet tubes 56 are axial (or straight) tubes, as shown. Alternatively, outlet tubes 56 may be an elbow-shaped tube or have any other suitable directional configuration. Outlet tubes 56 may be connected, such as directly connected, to the transition tube 54 or another outlet tube 56. Air flowed through the transition tube 54 may thus be flowed from the transition tube 54 into the outlet tube(s) 56. In exemplary embodiments, outlet tube(s) 56 are rigid tubes.

Referring now to FIG. 2, a flexible tube, and in particular a corrugated tube, in accordance with embodiments of the present disclosure is illustrated. While in the embodiment illustrated the flexible tube is a transition tube 54, in other embodiments the tube may be an inlet tube 52 or other suitable tube.

A flexible tube may, as shown, have an inner surface 62 and an outer surface 64. The flexible tube may further include corrugations 66 or other suitable flexible features, and these features may form components of the inner surface 62 and outer surface 64. The flexible tube may further include a main body 70 and opposing flanges 72 on one or both axial ends of the main body 70. Main body 70 may include the corrugations 66 or other suitable flexible features, and flanges 72 may connect the flexible tube to other components of the tube assembly 50 or blower 10 generally.

Further, a liner 80 may be provided inside the flexible tube. The liner 80 may, for example, have a tubular shape, such that the liner 80 covers an entire circumferential portion of the flexible tube or main body 70 thereof. Further, in some exemplary embodiments, an axial length of the liner 80 may be approximately equal to an axial length of the main body 70.

Liner 80 may contact and/or be connected to the main body 70, such as to the inner surface 62 thereof. Liner 80 may thus be disposed in airflow path 60 through the flexible tube, such that the air contacts the liner 80.

Liner 80 is in exemplary embodiments formed from a damper material which reduces the noise associated with the air flowing through the flexible tube and tube assembly 50 generally. For example, the damper material forming liner 80 may in exemplary embodiments be a foam or a fiber-based composite or other material, such as a glass-fiber or natural-fiber (such as jute) based composite or other material. In exemplary embodiments, the damping material may be an open cell material, such as an open cell foam. For example, the damper material may be formed from a polyurethane foam, such as in exemplary embodiments an open cell polyurethane foam.

The use of a liner 80 disposed in the interior of the flexible tube as disclosed herein is particularly advantageous, as it provides both noise reduction and efficiency improvements for blowers 10 associated therewith. For example, liner 80 advantageously reduces the noise of air flowing through the flexible tube. Further, the use of a liner 80 advantageously reduces losses associated with air flowing through the flexible tube by, for example, reducing the amount of air that interacts with the corrugated or otherwise flexible tube (and particularly the inner surface 62 thereof).

Blower assembly 12 may further include a handle 90. Handle 90 may, for example, be connected to the tube assembly 50, such as to an outlet tube 56 thereof as shown. Alternatively, handle 90 may be connected to the housing 24. A trigger 92 may be included in the handle 90. The trigger 92 may be connected to the motor 20 and/or power source 40, and may be operable to cause operation of the blower 10 by activating and deactivating the motor 20. The trigger 92 can include variable speed selectivity, allowing the operator to variably control the power of the blower 10 within a preset range of speeds.

Further aspects of the invention are provided by one or more of the following embodiments:

A blower including a blower assembly, the blower assembly including a motor, a fan, and a power source. The blower further includes a tube assembly connected to the blower assembly, the tube assembly including a flexible tube. The blower further includes a liner disposed within the flexible tube, the liner formed from a damper material.

A blower including a frame assembly and a blower assembly coupled to the frame assembly, the blower assembly including a motor, a fan, and a power source. The blower further includes a tube assembly connected to the blower assembly, the tube assembly including a rigid inlet tube, a flexible transition tube, and a rigid outlet tube. The blower further includes a liner disposed within the flexible transition tube, the liner formed from a damper material.

A blower in accordance with one or more embodiments disclosed herein, wherein the damper material is a foam.

A blower in accordance with one or more embodiments disclosed herein, wherein the flexible tube is a corrugated tube.

A blower in accordance with one or more embodiments disclosed herein, wherein the flexible tube includes a main body, and wherein an axial length of the liner is approximately equal to an axial length of the main body.

A blower in accordance with one or more embodiments disclosed herein, wherein the liner has a tubular shape.

A blower in accordance with one or more embodiments disclosed herein, wherein the liner is connected to an inner surface of the flexible tube.

A blower in accordance with one or more embodiments disclosed herein, wherein the tube assembly includes an inlet tube, a transition tube, and an outlet tube, and wherein the transition tube is the flexible tube.

A blower in accordance with one or more embodiments disclosed herein, wherein the inlet tube is elbow-shaped.

A blower in accordance with one or more embodiments disclosed herein, wherein the inlet tube and outlet tube are rigid tubes.

A blower in accordance with one or more embodiments disclosed herein, wherein the power sources is a battery.

A blower in accordance with one or more embodiments disclosed herein, further including a frame assembly, wherein the blower assembly is coupled to the frame assembly.

A blower in accordance with one or more embodiments disclosed herein, wherein the frame assembly includes a frame and a harness.

A blower in accordance with one or more embodiments as shown and described herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A blower comprising:
a blower assembly, the blower assembly comprising a motor, a fan, and a power source;
a tube assembly connected to the blower assembly, the tube assembly comprising a flexible tube; and
a liner disposed within the flexible tube, the liner formed from a damper material.

2. The blower of claim 1, wherein the damper material is a foam.

3. The blower of any of claims 1-2, wherein the flexible tube is a corrugated tube.

4. The blower of any of claims 1-3, wherein the flexible tube comprises a main body, and wherein an axial length of the liner is approximately equal to an axial length of the main body.

5. The blower of any of claims 1-4, wherein the liner has a tubular shape.

6. The blower of any of claims 1-5, wherein the liner is connected to an inner surface of the flexible tube.

7. The blower of any of claims 1-6, wherein the tube assembly comprises an inlet tube, a transition tube, and an outlet tube, and wherein the transition tube is the flexible tube.

8. The blower of claim 7, wherein the inlet tube is elbow-shaped.

9. The blower of any of claims 7-8, wherein the inlet tube and outlet tube are rigid tubes.

10. The blower of any of claims 1-9, wherein the power source is a battery.

11. The blower of any of claims 1-10, further comprising a frame assembly, wherein the blower assembly is coupled to the frame assembly.

12. The blower of claim 11, wherein the frame assembly comprises a frame and a harness.

13. The blower of claim 1, further comprising:
a frame assembly, wherein the blower assembly is coupled to the frame assembly; and
wherein flexible tube is a transition tube, and wherein the tube assembly further comprises a rigid inlet tube and a rigid outlet tube.
